Europäisches Patentamt

European Patent Office

Office européen des brevets

(19)

(11) Veröffentlichungsnummer: **0 375 774 B1**

# (12) EUROPÄISCHE PATENTSCHRIFT

(45) Veröffentlichungstag der Patentschrift: **09.12.92**

(51) Int. Cl.⁵: **B23H 7/00**

(21) Anmeldenummer: **87906801.3**

(22) Anmeldetag: **17.09.87**

(86) Internationale Anmeldenummer:
**PCT/SU87/00099**

(87) Internationale Veröffentlichungsnummer:
**WO 88/02294 (07.04.88 88/08)**

(54) **VORRICHTUNG ZUM ELEKTROEROSIVEN BOHREN VON LÖCHERN IN WERKSTÜCKEN.**

(30) Priorität: **25.09.86 SU 4119670**

(43) Veröffentlichungstag der Anmeldung:
**04.07.90 Patentblatt 90/27**

(45) Bekanntmachung des Hinweises auf die
Patenterteilung:
**09.12.92 Patentblatt 92/50**

(84) Benannte Vertragsstaaten:
**CH DE FR GB IT LI SE**

(56) Entgegenhaltungen:
**SU-A- 844 191**
**SU-A- 6 076 91**

**B.A. Artamonov et al. "Elektrofizicheskie i
elektrokhimicheskie metody obrabotki materialov", Vol. I. Obrabotka materialov s primeneniem instrumenta, 1983, Visshaya shkola,
Moscow, see pages 73-75**

(73) Patentinhaber: **INSTITUT ELEKTRONIKI IMENI
U.A. ARIFOVA AKADEMII NAUK UZBEXKOI
SSR
Akademgorodok
Tashkent, 700125(SU)**

(72) Erfinder: **VAKHIDOV, Khaidar Akhmedovich
massiv Chilanzar, 2-23-6
Tashkent, 700115(SU)**
Erfinder: **ABDUKARIMOV, Erkin Tukhtaevich
Ts-1, 52-6
Tashkent, 700000(SU)**

(74) Vertreter: **Patentanwälte Zellentin & Partner
Zweibrückenstrasse 15
W-8000 München 2(DE)**

EP 0 375 774 B1

## Beschreibung

Die vorliegende Erfindung bezieht sich auf die elektroerosive Metallbearbeitung und betrifft eine Vorrichtung gemäß dem Oberbegriff des Anspruchs 1.

Stand der Technik

Es ist eine Vorrichtung zum elektroerosiven Bohren von Löchern mittels einer Elektrode bekannt (US, A, Nr. 4.543.460). Die bekannte Vorrichtung enthält einen Elektrodenhalter, der ein Führungselement dar stellt, über dessen Innenöffnung die Elektrode unter Einwirkung eines Elektrodenvorschubantriebs ihre Längsachse entlang (nach oben und nach unten) geführt wird. Die Speisung des Antriebs erfolgt durch eine digitale Steuereinrichtung, deren Steuersignale (Impulse) die Spaltgrösse zwischen dem Arbeitsende der Elektrode und dem Werkstück sowie den Vorschubweg der Elektrode in die Tiefe des Werkstücks einstellen. Ausserdem spricht der Elektrodenvorschubantrieb auf die Signale aus dem Arbeitsspalt an und verstellt nach diesen Signalen das Arbeitsende der Elektrode gegenüber dem Werkstück, wodurch ein ständiger Arbeitsspalt eingehalten wird. Die Grösse dieses Spaltes wird auch konstant gehalten, um den elektroerosiven Elektrodenverschleiss auszugleichen. Der Elektrodenvorschubantrieb kann auch eine zusätzliche Funktion übernehmen, und zwar die Elektrode um ihre Längsachse zu drehen und die Elektrode entlang ihrer Längsachse schwingen zu lassen.

Das elektroerosive Medium oder die Abtragflüssigkeit wird dem Arbeitsspalt unter Druck zugeführt, indem es bzw. sie aus einem Behälter über ein Rohr in den Hohlraum des Führungselementes zufliesst. Die bekannte Vorrichtung ist ausserdem mit einer Einheit versehen, die das Entfernen von Abfällen des elektroerosiven Prozesses aus dem Arbeitsspalt steuert, derart, dass die Konzentration dieser Abfälle etwas über den vorgegebenen Konzentrationswerten gehalten wird mit dem Ziel, die Destabilisierung der Bildung von elektrischen Impulsentladungen zu verhindern und somit den Elektrodenvorschub und die Bearbeitung des Werkstücks zu stabilisieren.

Die Einheit ist in unmittelbarer Nähe der Werkstückoberfläche unter Bildung eines geringen Abstands zwischen der Elektrode und dem Werkstück angeordnet. Die Einheit weist eine zentrale Öffnung zur Durchführung der Elektrode auf, wobei zwischen der Wandung der Öffnung und der Elektrode auch ein Spalt besteht. Diese Einheit besitzt in ihrem oberen Teil eine Ringaussparung, in die das untere Ende des zylindrischen Führungselementes mit der Elektrode hineingeht, wobei das Führungselement und die Einheit miteinander befestigt sind. Die zentrale Öffnung der Einheit steht mit der Innenöffnung des Führungselementes, in der sich das obere Teil der Elektrode befindet, in Verbindung. Die Einheit bildet mit seinem unteren Teil, der sich längs der Werkstückoberfläche erstreckt, einen gleichmässigen Spalt zur Werkstückoberfläche. Die Einheit ist durch ihren Antrieb in der senkrechten Richtung bewegbar, der auch von den Steuersignalen der digitalen Steuereinrichtung gesteuert wird, wobei die Einheit nach diesen Signalen ihre Stellung in der Senkrechten mit dem Ziel ändert, um den Spalt zwischen der unteren Ebene der Einheit und der Werkstückoberfläche gleichbleibend zu halten. Dieser Antrieb spricht auch auf die Änderung des Arbeitsspaltes an, der die Information über die veränderten Bearbeitungsverhältnisse trägt.

Die Ausführung der Elektrode mit dem Vorschubantrieb und Ausgleich des verbrauchten Teils der Elektrode in Verbindung mit dem Abtragflüssigkeitsumlaufsystem in der Bearbeitungszone erlaubt es aber der bekannten Vorrichtung nicht, tiefe Löcher zu bohren, deren Durchmesser mit dem Durchmesser der Elektrode vergleichbar wäre, weil bei diesem Verfahren während des elektroerosiven Bohrens eines Loches der Verbrauch an der der Elektrode zuzuführenden Elektroenergie ständig wächst und ein grösserer Teil der Elektroenergie auf die seitliche Erosion aufgewendet wird, die zwischen der Wand des zu bohrenden Lochs und der blanken Elektrode über ihre ganze Länge, welche der Bohrungstiefe gleich ist, entsteht. Darüber hinaus verursacht des Fehlen des Umlaufs der Abtragflüssigkeit in der Bearbeitungszone ständige Verstopfungen des Arbeitsspaltes mit Erosionsprodukten. Im Endergebnis führt all das dazu, dass der elektroerosive Bohrungsprozess etwa in einer Tiefe von 8 bis 10 Elektrodendurchmessern aufhört.

Offenbarung der Erfindung

Der Erfindung liegt die Aufgabe zugrunde, eine Vorrichtung zum Bohren von Löchern in elektrisch leitenden Werkstoffen zu schaffen, bei der durch die bauliche Gestaltung der Einrichtung zum Ausgleich des Verschleisses des Werkzeugelektrodenschaftes die Leistung und Genauigkeit der Bearbeitung von tiefen und supertiefen Löchern erhöht werden können.

Die gestellte Aufgabe wird dadurch gelöst, dass bei einer Vorrichtung zum elektroerosiven Bohren von Löchern in Werkstücken, die eine in einem Elektrodenhalter aufgenommene, in Form eines in eine Hülle mit einem Spiel eingeschlossenen und aus dieser herausragenden Schaftes ausgebildete Werkzeugelektrode sowie eine Einrichtung zum Bewegen und Verriegeln der Werkzeugelektrode und zum Ausgleich ihres Verschleisses enthält, erfindungsgemäss die Einrichtung zum Bewegen und Verriegeln der Werkzeugelektrode und zum Ausgleich ihres Verschleisses einen treibenden und einen getriebenen Wagen enthält, die miteinander kinematisch verbunden und zueinander parallel angeordnet sind, wobei auf jedem der Wagen ein Spannzeug zum abwechselnden Verriegeln des Schaftes der Werkzeugelektrode vorgesehen ist, welches Spannzeug in Form einer beweglichen und einer festen Backe ausgebildet ist, während im Körper jedes der Wagen auf gleicher Höhe mit dem Spalt zwischen der beweglichen und der festen Backe des jeweiligen Spannzeuges durchgehende Zentrieröffnungen vorhanden sind, die koaxial zu einem Kanal verlaufen, der in einem im unteren Teil des Elektrodenhalters starr befestigten Stutzen ausgebildet ist, wobei in diesem Kanal der Schaft der Werkzeugelektrode axial verschiebbar untergebracht ist, dessen Hülle koaxial zum Schaft am Stutzen des Elektrodenhalters starr befestigt ist, während der Elektrodenhalter am treibenden Wagen starr befestigt ist.

Der Elektrodenhalter kann vorzugsweise hohl ausgebildet werden, wobei dieser Hohlraum des Elektrodenhalters mit dem Kanal, in dem der Schaft untergebracht ist, derart in Verbindung stehen soll, dass die Abtragflüssigkeit über den Spalt zwischen der Hülle und dem Schaft der Werkstückbearbeitungszone zugeführt werden kann.

Die vorliegende Erfindung ermöglicht die Herstellung von tiefen und supertiefen Löchern in beliebigen elektrisch leitenden Werkstoffen mit hoher Genauigkeit und Reinheit der Oberflächenbearbeitung.

Beschreibung

Des weiteren wird die vorliegende Erfindung an Hand von Ausführungsbeispielen mit Hinweisen auf Zeichnungen näher erläutert. Es zeigt:
Fig. 1 die erfindungsgemässe Vorrichtung zum elektroerosiven Bohren von Löchern in elektrisch leitenden Werkstoffen;
Fig. 2 den Antrieb der Verriegelungseinrichtung;
Fig. 3 einen Längsschnittdurch den Elektrodenhalter;
Fig. 4 den Wannenkörper der Vorrichtung in Querschnitt;
Fig. 5 die Führungsbahn eines Wagens im Schnitt.

Ausführungsform der Erfindung

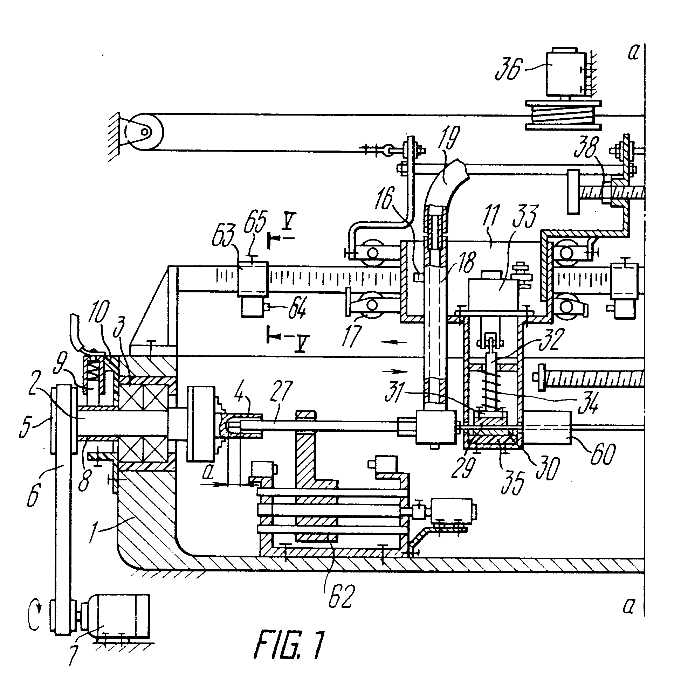

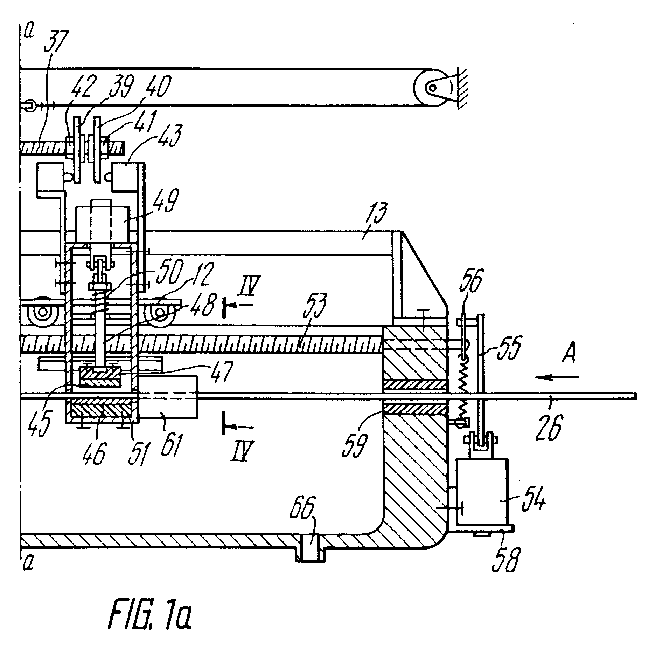

Die erfindungsgemäss vorgeschlagene Vorrichtung zum elektroerosiven Bohren von Löchern, enthält eine Wanne 1 (Fig. 1), in deren Wand eine Welle 2 in Lagern 3 montiert ist, an der ein Werkstück 4 befestigt wird. Die Welle 2 ist über eine Scheibe 5 und einen Riementrieb 6 mit einem Elektromotor 7 zum übertragen des Drehmomentes auf das Werkstück 4 verbunden. An dem über die Wanne 1 herausragenden Ende der Welle 2 ist zwischen der Scheibe 5 und dem Lager 3 eine Spreizbuchse 8 angebracht, die mit einer abgefederten elektrischen Bürste 9 in Berührung steht, wobei die Bürste 9 an einem Deckel 10 befestigt ist, der aus einem dielektrischen Werkstoff hergestellt und an dar Aussenwand der Wanne 1 angebracht ist. Uber die Bürste 9, die Spreizbuchse 8 und die Welle 2 wird ein elektrisches Potential dem Werkstück 4 zugeführt, dessen Polarität dem Vorzeichen nach der Polarität der Werkzeugelektrode (in diesem Fall Plus) entgegengesetzt ist. Die Vorrichtung umfasst auch eine Einrichtung zum Bewegen und Verriegeln der Werkzeugelektrode und zum Ausgleich ihres Verschleisses, welche Einrichtung in Form eines treibenden Wagens 11 und eines getriebenen Wagens 12, die miteinander kinematisch verbunden und zueinander parallel angeordnet sind, ausgebildet ist.

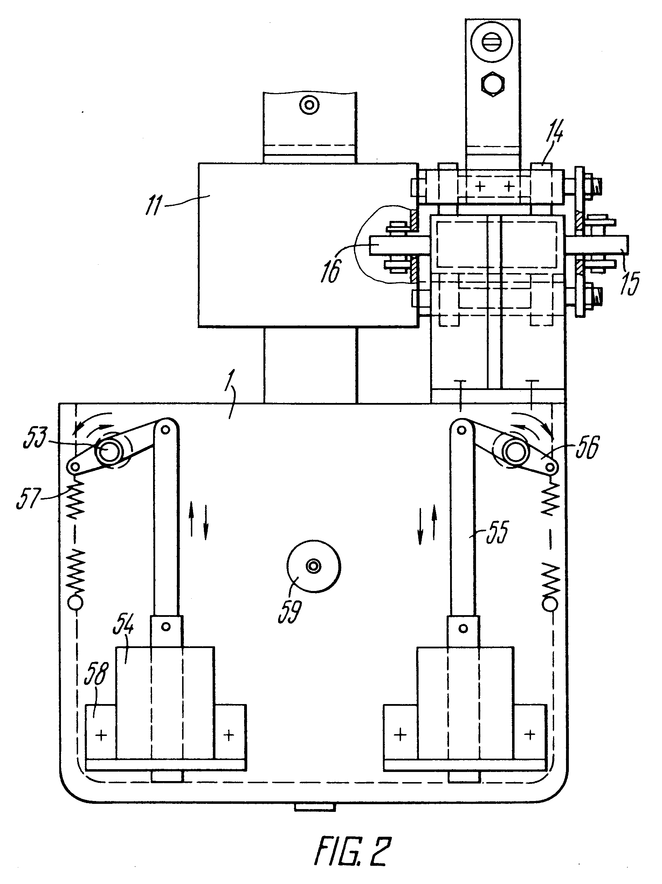

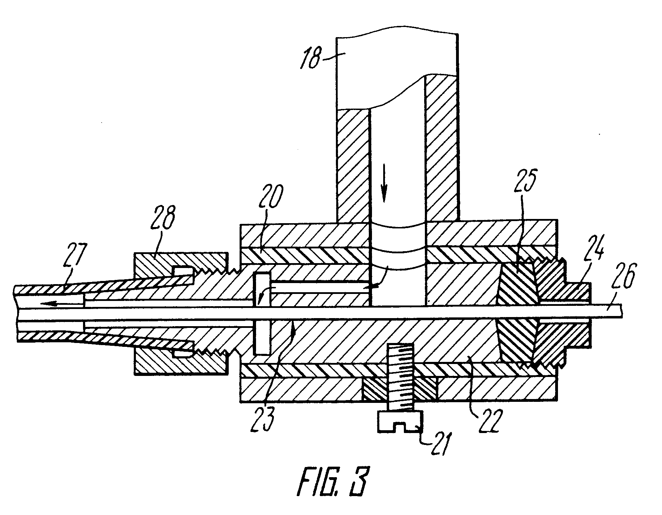

Der treibende Wegen 11 bewegt sich mittels Rollen 14, 15, 16 (Fig. 2) und 17 (Fig. 1 über eine Führungsbahn 13, die parallel zur Drehachse der Welle 2 verläuft. Am Körper des treibenden Wagens 11 wird ein hohler Elektrodenhalter 18 starr befestigt, in dessen Inneres über einen biegsamen Stutzen 19 die Abtragflüssigkeit unter Druck gefördert wird. Im unteren Teil des Elektrodenhalters 18 ist eine Buchse untergebracht, die mit dem Elektrodenhalter 18 einteilig hergestellt ist. Innerhalb der Buchse ist eine dielektrische Buchse 20 (Fig. 3) eingepresst, in der, seinerseits, ein Stutzen 22 Koaxial angeordnet und mit einer Schraube 21 festgehalten ist. Im Stutzen 22 ist entlang seiner Längsachse ein durchgehender Kanal 23 ausgeführt, der zur Drehachse der Welle 2 koaxial verläuft. An einem Ende des Stutzens 22 ist eine Andrückmutter 24 mit einer Dichtung 25 angebracht, und durch den Kanal 23, die Andrückmutter 24 und die Dichtung 25 ist der Schaft 26 der Werkzeugelektrode geführt.

Der Schaft 26 der Werkzeugelektrode ist mit Spiel in eine Hülle 27 eingeschlossen, die mit einer Mutter 28 am Stutzen 22 befestigt wird, wobei das Arbeitsende des Schaftes 26 der Werkzeugelektrode aus der Hülle 27 (Fig. 1) um einen bestimmten vorgegebenen Wert "a" herausragen muss. Am Körper des treibestden Wagens 11 ist ein Spannzeug für den Schaft 26 der Werkzeugelektrode vorgesehen, das in Form einer beweglichen Backe 29 und einer festen Backe 30 ausgebildet ist. Mit der elektrisch leitenden beweglichen Backe 29 ist über eine dielektrische Platte 31 die Zustange 32 eines auf dem treibenden Wagen 11 montierten elektromagnetischen Antriebs 33 verbunden. Die elektrisch leitende bewegliche Backe 29 ist an den Stromkreis eines Stromversorgungsblocks (nicht dargestellt) angeschlossen und weist eine gegenüber der Polarität des Werkstücks 4 entgegengesetzte Polarität (in diesem Fall Minus) auf. Die bewegliche Backe 29 drückt mit der Federkraft einer Feder 34 den Schaft 26 der Werkzeugelektrode an die feste Backe 30 dicht an und gewährleistet somit eine zuverlässige Verriegelung des Schaftes 26 der Werkzeugelektrode. Die unbewegliche Backe 30 wird an einer dielektrischen Platte 35 befestigt, die am Körper des treibenden Wagens 11 fest angeschraubt ist. Die Zuführung eines entsprechenden Potentials vom Stromkreis des Stromversorgungsblocks der elektrisch leitenden festen Backe 30 erfolgt in gleicher Weise wie bei der beweglichen Becke 29. Der treibende Wagen 11 ist mittels eines über Rollen übergeworfenen flexiblen Zuges mit einem Bewegungsantrieb 36 zur Bewegung des treibenden Wagens 11 verbunden. Der Antrieb 36 ist mit dem Stromversorgungs- und Steuerblock verbunden, von dem Steuersignale (Befehle) eintreffen, die den Vorschubvorgang der Werkzeugelektrode und deren Ausgleich steuern. Am Körper des treibenden Wagens 11 wird eine Schraube 37 angebracht, die man mit einer Gegenmutter 38 arretiert. Auf das vorspringende Ende der Schraube 37 sind Stösselmuttern 39 und 40 aufgeschraubt, die mit Gegenmuttern 41 und 42 gesichert werden. Die Lage der Stösselmuttern 39 und 40 ist so gewählt, dass sie zwischen zwei Endausschaltern 43 zu liegen kommen. Die Endausschalter 43 sind auf Konsolen des Körpers des getriebenen Wagens 12 befestigt. Auf diese Weise ist die kinematischen Bindung zwischen dem treibenden und dem getriebenen Wagen 11 bzw. 12 vorgesehen. Der getriebene Wagen 12 bewegt sich auf vier Rollen 44, die sich auf die Kanten der beiden Längswände der Wanne 1 stützen, welche Kanten als Führungen für den getriebenen Wagen 12 eingesetzt werden. Die Führungskanten der Längswände der Wanne 1 sind parallel zur Führung 13 angeordnet. Am Körper des getriebenen Wagens 12 ist auch ein Spannzeug für den Schaft 26 der Werkzeugelektrode vorhanden, das in Form einer beweglichen 45 und einer festen Backe 46 ausgebildet ist. Die elektrisch leitende bewegliche Backe 45 ist über eine dielektrische Platte 47 mit der Zugstange 48 eines elektromagnetischen Antriebs 49 verbunden, der am Körper des getriebenen Wagens 12 montiert ist. Die bewegliche Backe 45 ist an den Stromkreis des (nicht dargestellten) Stromversorgungsblocks angeschlossen und weist eine entgegengesetzte Polarität (in diesem Fall Minus) gegenüber der Polarität des Werkstücks 4 (Fig. 1 ) auf. Die bewegliche Backe 45 wird durch die Federkraft einer Feder 50 von der festen Backe 46 abgedrückt, die oberhalb einer am Körper des getriebenen Wagens 12 mit zwei Schrauben gesicherten dielektrischen Platte 51 angeordnet ist. Die Zuführung eines entsprechenden Potentials vom Stromkreis des Stromversorgungsblocks der elektrisch leitenden festen Backe 46 erfolgt in gleicher Weise wie bei der beweglichen Backe 45. Im Körper des treibenden Wagens 11 und des getriebenen Wagens 12 sind auf gleicher Höhe mit dem Spalt zwischen der beweglichen und der festen Backe des Spannzeuges durchgehende Zentrieröffnungen vorgesehen, die zu dem Kanal 23 (Fig. 3) koaxial angeordnet sind.

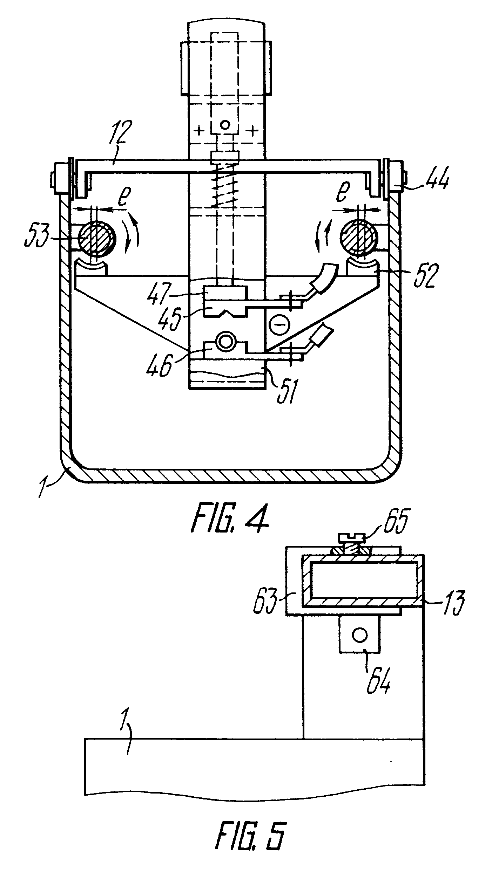

Am Körper des getriebenen Wagens 12 sind Konsolen mit Bremsklötzen 52 (Fig. 4) angebracht; die Wagen 12 kommen mit gegenüber deren Drehachse exzentrisch angeordneten Schrauben 53 (mit Exzentrizität "e") in Eingriff.

Das Drehen der Schrauben 53 erfolgt durch am Körper der Wanne 1 befestigte elektromagnetische Antriebe 54 (Fig. 2), die jeweils auf die Schraube über eine Zugstange 55 und einen zweiarmigen Hebel 56 einwirken. Die Feder 57, welche mit einem Ende am zweiarmigen Hebel 56 und mit dem anderen Ende am Körper der Wanne 1 befestigt ist, dient zur Rückführung der Schraube 53 in die Ausgangsstellung. Die elektromagnetischen Antriebe 54 sind auf einer Konsole 58 angebracht, die am Körper der Wanne 1 mit Schrauben angeschraubt ist. Zur Elektroisolierung des Schaftes 26 der Werkzeugelektrode (Fig. 1 ), deren Ende über die Wanne 1 herausragt, gegen den Körper der Wanne 1 ist er in eine in die Wand der Wanne 1 eingepresste dielektrische Buchse 59 gelagert.

Bei Bedarf lässt die Ausführung der erfindungsgemässen Vorrichtung die Rotation des Schaftes 26 der Werkzeugelektrode zu, wodurch die technologischen Möglichkeiten der Vorrichtung erweitert werden. Dies wird durch Verwendung von Zusatzgeräten 60 und 61 erreicht, die am treibenden Wagen 11 bzw. am getriebenen Wagen 12 befestigt werden. Auf dem Wannenboden ist eine Vorschubeinrichtung für eine Lünette 62 aufgestellt, die zur Feinzentrierung der Werkzeugelektrode während des elektroerosiven Bohrens eines Lochs im Werkstück 4 dient. Die Lünette 62 ist längs der Drehachse der Welle 2 bewegbar. Diese Bewegung der Lünette 62 erfolgt mit Hilfe eines Sonderantriebes. An die Führungsbahnen 13 sind mittels Sonderschellen 63 Endausschalter 64 (Fig. 5) derart angeschlossen, dass sie sich in Längsrichtung über die Führungen 1 3 bewegen und mittels einer Feststellschraube 65 in einer ausgewählten Stellung gesichert werden können. Zum Auslassen der Abtragflüssigkeit ist im Böden der Wanne 1 (Fig. 1 ) eine Ausflussöffnung 66 vorgesehen.

Die Vorrichtung zum elektroerosiven Bohren von Löchern funktioniert folgendermassen.

Das Werkstück 4 (Fig. 1) wird beispielsweise in einem Futter an der Welle 2 aufgespannt. Je nach der Grösse des über das Futter herausragenden Teils des Werkstücks 4 und der Tiefe der herzustellenden Bohrung wird die Ausgangsstellung des treibenden Wagens 11 und des getriebenen Wagens 12 sowie die der Lünette 62 gewählt, und demgemäss wird auch die Lage des Endausschalters 64 festgelegt, der den Gang des treibenden Wagens 11 und des getriebenen Wagens 12 in der linken Endstellung begrenzt. In die Ausgangsstellung werden der treibende und der getriebene Wagen (11 bzw.12)durch Einschalten des Antriebs 36 gebracht. Durch Einschalten des Sonderantriebes wird die Lünette 62 in die Ausgangsstellung geführt. Der nach der Bohrungsgrösse ausgewählte Schaft 26 der Werkzeugelektrode wird durch die dielektrische Buchse 59, die durchgehende Zentrieröffnung und weiterhin zwischen den ausgeklinkten Backen 45 und 46 des Spannzeugs für den Schaft 26 der Werkzeugelektrode am getriebenen Wagen 12 hindurchgezogen. Daraufhin, um den Schaft 26 der Werkzeugelektrode zwischen den Backen 29 und 30 des Spannzeugs des treibenden Wagens 11 zu führen, schaltet man den elektromagnetischen Antrieb 33 (durch einen nicht dargestellten Sonderumschalter) ein, und nach dem Heben der beweglichen Backe 29 wird in den entstandenen Spalt zwischen den Backen 29 und 30 der Schaft 26 der Werkzeugelektrode gezogen, der nach dem Passieren der durchgehenden Zentrieröffnungen in den Kanal 23 (Fig. 3) des Stutzens 22 gelangt und dann aus dem Stutzen 22 um die erforderliche Länge hinausgeführt wird. Danach wird die für das Mass des zu bohrenden Loches ausgewählte Hülle 27 auf den aus dem Stutzen 22 herausragenden Teil des Schaftes 26 der Werkzeugelektrode aufgezogen und am Stutzen 22 mit der Mutter 28 festgemacht. Der Innendurchmesser der Hülle 27 muss ein notwendiges Spiel zwischen dem Schaft 26 der Werkzeugelektrode und der Innenwand der Hülle 27 sicherstellen. Nachdem die Hülle 27 am Elektrodenhalter 18 festgemacht worden ist, verschiebt man bei Bedarf den Schaft 26 der Werkzeugelektrode mit dem Ziel, das Arbeitsende des Schaftes 26 (Fig. 1) der Werkzeugelektrode aus der Hülle 27 um den vorbestimmten Wert "a" austreten zu lassen. Nachdem das Ende des Schaftes 26 der Werkzeugelektrode aus der Hülle 27 hinausgeschoben worden ist, schaltet man den elektromagnetischen Antrieb 33 des treibenden Wagens 11 aus, wodurch die bewegliche Backe 29 unter der Wirkung der Feder 34 den Schaft 26 der Werkzeugelektrode an die feste Backe 30 des Spannzeugs für den Werkzeugelektrodenschaft andrückt; somit wird der Schaft 26 der Werkzeugelektrode in vorgegebener Stellung am treibenden Wagen 11 festgehalten. Daraufhin führt man durch Verschieben des treibenden Wagens 11 das Ende des Schaftes 26 der Werkzeugelektrode in die Zentrieröffnung der Lünette 62 ein. Es wird der Elektromotor 7 eingeschaltet, der über den Riementrieb 6 die Scheibe 5 und nebst dieser auch die Welle 2 mit dem Werkstück 4 dreht. Über den biegsamen Stutzen 19 wird dem Hohlraum des Elektrodenhalters 18 die Abtragflüssigkeit unter Druck zugeleitet, die über eine Sonderöffnung und einen Pfropfen im Stutzen 22 dem Kanal 23 zufliesst und weiterhin in den Spalt zwischen dem Schaft 26 der Werkzeugelektrode und der Innenwand der Hülle 27 kommt. Daraufhin tritt die Abtragflüssigkeit aus der Hülle 27 der Werkzeugelektrode aus und umspült das aus der Hülle 27 hinausragende Arbeitsende des Schaftes 26 der Werkzeugelektrode.

Nachdem man sicher ist, dass die Abtragflüssigkeit der Bearbeitungszone des Werkstücks 4 normal zufliesst, wird der Stromversorgungs- und Steuerblock (nicht dargestellt) eingeschaltet, wodurch auf das Werkstück 4 über die Bürste 9 und auf den Schaft 26 der Werkzeugelektrode über die Backen 29 und 30 des Spannzeugs für den Schaft 26 der Werkzeugelektrode am treibenden Wagen 11 eine Spannung angelegt wird. Gleichzeitig erfolgt der Vorschub des treibenden Wagens 11 zusammen mit der Werkzeugelektrode unter Einwirkung des Bewegungsantriebs 36 zum Werkstück 4. Sobald der Elektrodenabstand (der Spalt zwischen dem Arbeitsende des Schaftes 26 der Werkzeugelektrode und der Oberfläche des Werkstücks 4) einen erforderlichen Wert erreicht hat, entsteht ein Funken zwischen der Werkzeugelektrode und dem Werkstück 4, der den Beginn des elektroerosiven Prozesses bedeutet. Gleichzeitig mit dem Vorschub der Werkzeugelektrode verschiebt sich auch die Lünette 62 durch den Sonderantrieb.

Während seiner Vorwärtsbewegung stemmt sich der treibende Wagen 11 mit der Stösselmutter 39 gegen den Endausschalter 43 und beginnt den getriebenen Wagen 12 nach sich zu führen. Der Abstand zwischen den Wagen 11 und 12 kann man je nach dem Durchmesser des Schaftes 26 der Werkzeugelektrode mit Hilfe der Schraube 37 ändern, indem man bei gelockerter Gegenmutter 38 die Schraube 37 anzieht oder löst. Nach einer gewissen Zeitspanne, während der sich der Prozess des elektroerosiven Bohrens des Loches abspielt, tritt die Notwendigkeit auf, den vorgegebenen Wert "a" der Länge des aus der Hülle 27 der Werkzeugelektrode austretenden Arbeitsendes des Schaftes 26 wiederherzustellen, weil der vorspringende Teil des Schaftes 26 der Werkzeugelektrode abgenutzt wird, d.h. es ist erforderlich, den Ausgleich des verbrauchten Teils der Werkzeugelektrode vorzunehmen. Der Ausgleich des verbrauchten Teils der Werkzeugelektrode wird in nachstehender Reihenfolge durchgeführt. Unter der Wirkung des Signals vom Stromversorgungs- und Steuerblock wird der Antrieb 36 zum Stehen gebracht, wodurch sich der treibende Wagen 11 nicht mehr bewegt und folglich auch zum Stehen gebracht wird. Die elektromagnetischen Antriebe 33 und 49 treten in Funktion. Dabei drückt die Zugstange 48, indem sie den Widerstand der Feder 50 überwindet, die bewegliche Backe 45 an den Schaft 26 der Werkzeugelektrode an und fixiert ihn somit im Spannzeug des getriebenen Wagens 12. Gleichzeitig drehen die unter der Wirkung des eingeschalteten elektromagnetischen Antriebs 54 drehenden zweiarmigen Hebel 56 (Fig. 2) mittels der Zustange 55, indem der Widerstand der Feder 57 überwunden wird, die Schrauben 53 (Fig. 4), die aufgrund der Exzentrizität "e" mit den ein Gewinde aufweisenden Bremsklötzen 52 in Eingriff kommen, wodurch der getriebene Wagen 12 gegenüber der Wanne 1 verriegelt wird. Danach hebt sich die Zugstange 32 in Überwindung des Widerstandes der Feder 34 und bewirkt somit das Ausklinken der Backen 29 und 30 des Spannzeugs des treibenden Wagens 11 wodurch der Schaft 26 der Werkzeugelektrode von der starren Verriegelung befreit wird.

Dann tritt der Antrieb 36 in Funktion, der den treibenden Wagen 11 zusammen mit der Hülle 27 der Werkzeugelektrode rückwärts verschiebt, d.h. nach der Seite, die der Richtung des Arbeitsvorschubes der Werkzeugelektrode entgegengesetzt ist. Der treibende Wagen 11 wird so weit zurückrollen, bis sich die Stösselmutter 40 gegen den Endausschalter 43 stemmt; dabei verschiebt sich die Hülle 27 der Werkzeugelektrode gegenüber dem unbeweglichen Schaft 26 der Werkzeugelektrode rückwärts, wobei der in diesem Moment am verriegelten getriebenen Wagen 12 starr fixiert ist. Dabei vergrössert sich die Länge des aus der Hülle 27 ausladenden Teils des Schaftes 26 der Werkzeugelektrode, d.h. es erfolgt ein Ausgleich des verbrauchten Teils des aus der Hülle 27 ausladenden Endes des Schaftes 26 der Werkzeugelektrode. Dabei wird der elektroerosive Prozess nicht unterbrochen. Der Wert, um den der verbrauchte Teil der Werkzeugelektrode ausgeglichen wird, lässt sich durch Einstellung des Spaltes zwischen den Stösselmuttern 39, 40 auf der Schraube 37 und den Endausschaltern 43 wählen. Sobald der Endausschalter 43 unter der Wirkung der Stösselmutter 40 anspricht, wird der Antrieb 36 abgeschaltet, d.h. der rückwärtige Vorschub (Rücklauf) des treibenden Wagens 11 wird unterbrochen. Der treibende Wagen 11 und die Hülle 27 der Werkzeugelektrode halten an.

Gleich darauf wird der elektromagnetische Antrieb 33 abgeschaltet, die bewegliche Backe 29 des Spannzeugs des treibenden Wagens 11 sinkt unter der Wirkung der Feder 34, und der Schaft 26 der Werkzeugelektrode wird fest zwischen den Backen 29 und 30 eingeklemmt.

Daraufhin wird der elektromagnetische Antrieb 49 eingeschaltet und unter Einwirkung der Feder 50 hebt sich die bewegliche Backe 45 des Spannzeugs des getriebenen Wagens 12 wobei der Schaft 26 der Werkzeugelektrode entriegelt wird.

Es wird der Vorschubantrieb 36 des treibenden Wagens 11 eingeschaltet und der letztere beginnt sich zusammen mit der Werkzeugelektrode in Richtung des Werkstücks 4 im Betriebszustand der elektroerosiven Bearbeitung zu bewegen.

Sobald sich die Stösselmutter 39 gegen den im linken Teil des getriebenen Wagens 12 befindlichen Endausschalter 43 stemmt, spricht der letztere an, und der elektromagnetische Antrieb 54 (Fig. 2) wird abgeschaltet. Unter Einwirkung der Feder 57 und des zweiarmigen Hebels 56 kommen die Schrauben 53 (Fig. 1) in die Ausgangsstellung zurück und somit ausser Eingriff mit den Bremsklötzen 52 (Fig. 2). Der getriebene Wagen 12 wird entriegelt und beginnt sich hinter dem treibenden Wagen 11 her vorwärtszubewegen. Der Elektroerosionsprozess geht weiter. Je nach Bedarf wird dieser Arbeitsgang wiederholt.

Nach Erreichen der erforderlichen Tiefe der Bohrung im Werkstück 4 stemmt sich der treibende Wagen 11 gegen den Endausschalter 64 (auf der Seite des Werkstücks) und nach dessen Ansprechen wird der Bewegungsantrieb 36 des treibenden Wagens 11 automatisch abgeschaltet, worauf dieser Wagen 11 anhält. Es wird auch die Spannungszufuhr an die Werkzeugelektrode und das Werkstück 4 abgeschaltet; darüber hinaus werden der Antrieb 36 und der Sonderantrieb der Lünette 62 eingeschaltet und diese führen im Umkehrbetrieb mit erhöhter Geschwindigkeit die beiden Wagen 11 und 12 und die Lünette 62 in die Ausgangsstellung zurück bis sie sich gegen die Endausschaltet 64 anschlagen, d.h. sie halten an.

Falls die Werkzeugelektrode mit einem rotierenden Schaft 26 zum Einsatz kommt, wird die Welle 2 mit dem Werkstück 4 mittels einer Feststellschraube verriegelt. Die Spannzeuge der beiden Wagen 11 und 12 werden vom Stromversorgungs- und Steuerblock völlig abgeschaltet, worauf die Zusatzgeräte 60 und 61 an den Stromversorgungs- und Steuerblock angeschlossen werden. Das Zusatzgerät 60 umfasst einen Drehantrieb für den Schaft 26 der Werkzeugelektrode und ein Spannzeug für den Schaft 26 der Werkzeugelektrode mit einer Stromzufuhr an den rotierenden Schaft 26 der Werkzeugelektrode. Das Zusatzgerät 61 umfasst ein sich drehendes Spannzeug für den Schaft 26 der Werkzeugelektrode mit der Stromzufuhr an den Schaft 26 der Werkzeugelektrode.

In dieser Ausführungsform arbeitet die Vorrichtung völlig wie die Vorrichtung mit dem nicht rotierenden Schaft 26 der Werkzeugelektrode mit Ausnahme des in diesem Fall ausser Betrieb stehenden Drehantriebs für die Welle 2. Dabei wird der Elektroerosionsprozess auch nicht während des Ausgleiches der Werkzeugelektrode beim rotierenden Schaft 26 der Werkzeugelektrode unterbrochen.

Die Erfindung ermöglicht die Herstellung von tiefen und supertiefen Löchern in beliebigen elektrisch leitenden Werkstoffen mit Durchmessern von 0,5 bis 3 mm mit hoher Bearbeitungsgenauigkeit und -reinheit der Wandoberflächen der Löcher. Dazu trägt das Vorliegen der Einrichtung zum Ausgleich des verbrauchten Teils des Schaftes der Werkzeugelektrode bei, mit deren Hilfe während des elektroerosiven Bohrens die Länge des aus der Hülle ausladenden verbrauchten Teils des Schaftes der Werkzeugelektrode konstant gehalten wird, wobei der Prozess des elektroerosiven Bohrens des Loches während des Ausgleiches des verbrauchten Teils dem Schaftes der Werkzeugelektrode nicht unterbrochen wird.

Die Vorrichtung lässt sich einfach mit einem automatischen Steuerungssystem des elektroerosiven Bohrens integrieren, was eine hohe Bearbeitungsgenauigkeit und -güte und die Betriebssicherheit bei der Arbeit mit der Vorrichtung gewährleistet und stellt nicht allzu hohe Anforderungen an die Qualifikation des Bedienungspersonals.

Gewerbliche Anwendbarkeit

Die Vorrichtung zum elektroerosiven Bohren von tiefen und supertiefen Löchern in beliebigen elektrisch leitenden Werkstoffen kann im Maschinenbau, Werkzeugmaschinenbau sowie in der Metallbearbeitung breit eingesetzt werden.

**Patentansprüche**

**1.** Vorrichtung zum elektroerosiven Bohren von Löchern in Werkstücken, die eine in einem Elektrodenhalter (I8) aufgenommene, in Form eines in eine Hülle (27) mit einem Spiel eingeschlossenen und aus dieser herausragenden Schaftes (26) ausgebildeten Werkzeugelektrode sowie eine Einrichtung zum Bewegen und Verriegeln der Werkzeugelektrode und zum Ausgleich ihres Verschleisses enthält, dadurch **gekennzeichnet**, dass die Vorrichtung zum Bewegen und Verriegeln der Werkzeugelektrode und zum Ausgleich ihres Verschleisses einen treibenden und einen getriebenen Wagen (11 bzw. 12) enthält, die miteinander kinematisch verbunden und zueinander parallel angeordnet sind, wobei auf jedem der Wagen (11, 12) ein Spannzeug zum abwechselnden Verriegeln des Schaftes (26) der Werkzeugelektrode vorgesehen ist, welches Spannzeug in Form einer beweglichen und einer festen Backe (29 bzw. 30 und 45 bzw. 46) ausgebildet ist, und im Körper jedes der Wagen ( 11, 12) auf gleicher Höhe mit dem Spalt zwischen der beweglichen und der festen Backe (29 bzw. 30 und 45 bzw. 46) durchgehende Zentrieröffnungen vorhanden sind, die koaxial zu einem Kanal (23) verlaufen, der in einem im unteren Teil des Elektrodenhalters (18) starr befestigten Stutzen (22) ausgebildet ist, wobei in diesem Kanal (23) der Schaft (26) der Werkzeugelektrode axial verschiebbar untergebracht ist, deren Hülle (27) koaxial zu dem Schaft (26) am Stutzen (22) des Elektrodenhalters (18) starr befestigt ist, während der Elektrodenhalter (18) am treibenden Wagen (11) starr befestigt ist.

**2.** Vorrichtung nach Anspruch 1 dadurch **gekennzeichnet**, dass der Elektrodenhalter (18) hohl ausgebildet ist und sein Hohlraum mit dem Kanal (23), in dem der Schaft (26) der Werkzeugelektrode untergebracht ist, in Verbindung steht, derart, dass die Förderung der Abtragflüssigkeit durch den Spalt zwischen der Hülle (27) und dem Schaft (26) zur Bearbeitungszone des Werkstücks (4) sichergestellt ist.

**Claims**

**1.** Device for the electrical discharge drilling of holes in workpieces which comprises a tool electrode, which is received in an electrode holder (18) and is constructed in the form of a shaft (26) enclosed with clearance in a sheath (27) and projecting therefrom, and an apparatus for moving and locking the tool electrode and for compensation of its wear, characterised in that the device for moving and locking the tool electrode and for compensation of its wear comprises a driving and a driven carriage (11 and 12 respectively) which are connected to one another kinematically and are arranged parallel to one another, a clamping tool being provided on each of the carriages (11, 12) for alternately locking the shaft (26) of the tool electrode, which clamping tool is constructed in the form of a movable and a fixed jaw (29 and 30 respectively and 45 and 46 respectively), and centring through-openings being present in the body of each of the carriages (11, 12) at the same height as the gap between the movable and the fixed jaw (29 and 30 respectively and 45 and 46 respectively), which centring openings run coaxially with a channel (23) which is constructed in a nozzle (22) fixed rigidly in the lower part of the electrode holder (18), the shaft (26) of the tool electrode being accommodated in said channel (23) so as to be axially displaceable and its sheath (27) being fixed rigidly to the nozzle (22) of the electrode holder (18) coaxially with the shaft (26) while the electrode holder (18) is fixed rigidly to the driving carriage (11).

2. Device according to Claim 1, characterised in that the electrode holder (18) is of hollow construction and its hollow space communicates with the channel (23), in which the shaft (26) of the tool electrode is accommodated, in such a way that the conveyance of the discharge liquid through the gap between the sheath (27) and the shaft (26) to the treatment zone of the workpiece (4) is ensured.

**Revendications**

1. Dispositif pour l'obtention par le perçage par électro-érosion de trous dans des pièces, comportant une électrode-outil contenue dans un porte-électrode (18) et exécutée sous la forme d'une barre (26) mise sous une gaine (27) avec un jeu et émergeant de ce dernier, ainsi qu'un ensemble pour le déplacement et la fixation de l'électrode-outil et pour la compensation de sa consommation, caractérisé en ce que l'ensemble pour le déplacement et la fixation de l'électrode-outil et pour la compensation de sa consommation comprend, montés en parallèle et cinématiquement reliés entre eux, un chariot de commande (11) et un chariot commandé (12) dont chacun porte une pince pour fixer rigidement, à tour de rôle, la barre (26) d'électrode-outil, ladite pince étant constituée par un mors mobile et un mors fixe (29, 30 et 45, 46), en ce que dans le corps de chacun des chariots (11, 12), au niveau de l'écartement entre le mors mobile et le mors fixe (29, 30 et 45, 46) de la pince, des orifices débouchants de centrage sont pratiqués de façon à être coaxiaux au canal (23) d'un raccord (22), fixé rigidement à la partie inférieure d'un porte-électrode (18), et en ce que dans ce canal (23), la barre (26) d'électrode-outil est logée avec une possibilité du déplacement axial, la gaine (27) de la barre (26) étant rigidement fixée au raccord (22) du porte-électrode (18), coaxialement à la barre (26), et le porte-électrode (18) étant fixé rigidement au chariot de commande (11).

2. Dispositif selon la revendication 1, caractérisé en ce que le porte-électrode (18) est réalisé creux, sa cavité étant en communication avec le canal (23) à l'intérieur duquel passe la barre (26), grâce à quoi l'amenée d'un liquide de travail est assurée, par le jeu entre la gaine (27) et la barre (26), dans la zone d'usinage de la pièce (4).

FIG. 1

EP 0 375 774 B1

FIG. 1a

FIG. 2

FIG. 3

FIG. 4

FIG. 5